Europäisches Patentamt

European Patent Office

Office européen des brevets

(11) Veröffentlichungsnummer: **0 304 717**

**A1**

(12) **EUROPÄISCHE PATENTANMELDUNG**

(21) Anmeldenummer: **88112898.7**

(22) Anmeldetag: **08.08.88**

(51) Int. Cl.⁴: **B65G 47/14**

(30) Priorität: **24.08.87 DE 3728212**

(43) Veröffentlichungstag der Anmeldung:
**01.03.89 Patentblatt 89/09**

(84) Benannte Vertragsstaaten:
**AT BE CH DE ES FR GB GR IT LI NL SE**

(71) Anmelder: **SORTIMAT Creuz & Co. GmbH**
**Postfach 250**
**D-7057 Winnenden (Württ.)(DE)**

(72) Erfinder: **Kögel, Rudolf**
**Schnarrenbergstrasse 2**
**D-7057 Winnenden(DE)**
Erfinder: **Strohmeier, Andreas**
**Kiefernstrasse 6**
**D-7069 Berglen/Steinach(DE)**
Erfinder: **Holzwarth, Friedrich**
**Espenweg 10**
**D-7060 Schorndorf-Oberberken(DE)**

(74) Vertreter: **von Hellfeld, Axel, Dipl.-Phys. Dr. et al**
**Patentanwälte Wuesthoff- v. Pechmann-Behrens-Goetz Schweigerstrasse 2**
**D-8000 München 90(DE)**

(54) **Vorrichtung zum lagerichtigen Zuführen.**

(57) Eine Vorrichtung zum lagerichtigen Zuführen von länglichen, an einem Ende einen Vorsprung aufweisenden Teilen, wie Kolben oder Zylinder von Einwegspritzen, weist eine gegen die Horizontale geneigte Schiene 16 auf, deren Oberseite zumindest teilweise die Form eines langgestreckten Trichters 18 hat. Am Boden mündet der Trichter 18 in einen Schlitz 22, der wellenförmig gestaltet ist. Die zuzuführenden Teile rutschen in Richtung auf den Schlitz 22 abwärts und werden durch im Schlitz 22 aufwärts bewegte Förderarme 20 mitgenommen.

FIG. 2

## Vorrichtung zum lagerichtigen Zuführen

Die Erfindung betrifft eine Vorrichtung zum lagerichtigen Zuführen von länglichen, an einem Ende eine Verbreiterung aufweisenden Teilen, wie z.B. Kolben oder Zylinder von Einwegspritzen mit den Merkmalen des Oberbegriffs des Patentanspruches 1.

Eine solche Vorrichtung ist aus der DD-Zeitschrift "Fertigungstechnik und Betrieb", 1973, S. 467 bis 470 bekannt. Eine aus der DE-PS 23 22 080 bekannte Vorrichtung weist eine gegen die Horizontale geneigte Schiene auf, deren Oberseite zumindest teilweise die Form eines langgestreckten Trichters hat. Der Trichter mündet in einen die Schiene in Längsrichtung durchsetzenden Schlitz, dessen Weite etwas größer ist als der Durchmesser eines der zuzuführenden Teile. Aufgrund ihrer Schwerkraft hängen sich die Teile in den Schlitz ein, wobei sich die Vorsprünge auf der Oberseite der Schiene abstützen. Die Vorrichtung dient dem Zuführen der Teile zu den Magazinierkanälen einer Verpackungsvorrichtung. Eine Vielzahl von Einhängeschlitzen sind parallel nebeneinander angeordnet und das Einführen der Teile in die Schlitze erfolgt durch periodisches Auf- und Abwärtsbewegen der Schlitze.

Die in Rede stehenden Teile werden üblicherweise Verpackungsmaschinen oder Montagevorrichtungen zugeführt. Eine Montagevorrichtung, in welcher die Kolben und Zylinder von Einwegspritzen zusammengebaut werden, ist in der deutschen Patentanmeldung P 37 15 457.5 beschrieben.

Das wesentliche Leistungskriterium für Zuführvorrichtungen ist die Förderleistung, d.h. die Zahl der pro Zeiteinheit zugeführten Teile.

Der Erfindung liegt die Aufgabe zugrunde, eine Vorrichtung zum lagerichtigen Zuführen von länglichen, einen Vorsprung aufweisenden Teilen zu schaffen, die bei einfachem Aufbau und hoher Funktionszuverlässigkeit eine große Förderleistung ermöglicht.

Die erfindungsgemäße Lösung dieser Aufgabe ist im Patenanspruch 1 gekennzeichnet.

Erfindungsgemäß wird also in einem in einer horizontal geneigten Schiene ausgebildeten Schlitz ein Förderarm in Längsrichtung der Schiene aufwärts bewegt, wobei der Förderarm zumindest während eines Teiles seiner Bewegung auf der Oberseite der Schiene aus dem Schlitz herausragt.

Die erfindungsgemäße Vorrichtung ist zum Zuführen von länglichen Teilen für alle möglichen Anwendungen geeignet, insbesondere zum Zuführen der Teile zu Montageautomaten oder Verpackungsvorrichtungen.

In einer bevorzugten Ausgestaltung der erfindungsgemäßen Vorrichtung wird die Schiene nicht bewegt und mehrere Förderarme durchlaufen mit Abstand zueinander den Schlitz in Aufwärtsrichtung der Schiene.

Die Schiene weist ingesamt die Form eines langgestreckten Trichters auf, so daß die zu fördernden Teile aufgrund Ihrer Schwerkraft immer in Richtung des Schlitzes rutschen.

Der Trichter ist seitlich so weit hochgezogen, daß keine Teile herausfallen können. In einer bevorzugten Ausgestaltung ist zusätzlich eine obere Abdeckung des Trichters aus durchsichtigem Material vorgesehen.

Es liegt im Rahmen des Erfindungsgedankens, eine geradlinige Schiene vorzusehen, in welcher mehrere Förderarme mit Abstand zueinander entlang des Schlitzes bewegbar sind, wobei die Förderarme in der Art einer Wellenbewegung periodisch in den Schlitz eintauchen und danach um ein vorgegebenes Stück aus dem Schlitz herausragen.

Es hat sich aber überraschend herausgestellt, daß bei sehr einfachem Aufbau der Vorrichtung eine sehr hohe Förderleistung mit hoher Funktionszuverlässigkeit dann erzielt werden kann, wenn die trichterförmige Oberseite der Schiene beidseits des Schlitzes in Längsrichtung der Schiene wellenförmig ausgestaltet ist. In dieser Ausgestaltung der Erfindung laufen die Förderarme geradlinig parallel zur Längsrichtung der Schiene und ragen in einem Wellenberg um ein kürzeres Stück aus dem Schlitz heraus als in einem Wellental. Bevorzugt verschwinden die Förderarme in einem Wellenberg zumindest annähernd im Schlitz, während sie in einem Wellental mit einer Höhe aus dem Schlitz herausragen, die ausreicht, um noch nicht in den Schlitz eingehängte Teile mitzunehmen, so daß die Teile ihre Lage ändern und sich ebenfalls lagerichtig in den Schlitz einhängen.

Gute Förderleistungen ergeben sich insbesondere dann, wenn die Wellenlänge der wellenförmigen Oberseite der Schiene einem mehrfachen, vorzugsweise dem 2- bis 4-fachen der Länge der zuzuführenden Teile entspricht. Auch der Abstand der durch den Schlitz laufenden Förderarme entspricht einem mehrfachen, vorzugsweise dem 2- bis 3-fachen der Länge der Teile.

Der Neigungswinkel der Schiene gegen die Horizontale hängt von der Art der zuzuführenden Teile ab und wird derart eingestellt, daß bei den gegebenen Teilen bei hoher Funktionszuverlässigkeit eine große Förderleistung erzielt wird.

Die zuzuführenden Teile werden im unteren Bereich der Schiene in den Trichter eingeführt und werden durch die Förderarme aufwärts bewegt, wobei die bereits in dem Schlitz hängenden Teile lagerichtig ausgerichtet sind und die noch nicht im Schlitz eingehängten Teile abwärts in Richtung auf den Schlitz rutschen und durch die Förderarme so lange bewegt werden, bis auch sie sich in den Schlitz einhängen.

Die am oberen Ende der Schiene nebeneinander lagerichtig im Schlitz hängenden Teile verlassen die Schiene an deren oberen Ende. Zur Abgabe der in den Schlitz eingehängten Teile aus der Schiene ist in einer bevorzugten Ausgestaltung der Erfindung ein geradliniges Anschluß-Schienenstück vorgesehen, welches sich an die Schiene, in welcher die Teile lagerichtig in den Schlitz eingehängt werden, anschließt und steiler gegen die Horizontale geneigt ist als die Schiene. Die Förderarme durchlaufen auch den in dem Anschluß-Schienenstück ausgebildeten Schlitz, so daß die Teile aufwärts bis zum Ende des Anschluß-Schienenstückes gefördert werden.

Damit sich die Teile beim Einhängen in den Schlitz nicht verkanten, ist in einer vorteilhaften Ausgestaltung der Erfindung vorgesehen, daß der Schlitz eine Tiefe aufweist, die etwa der Länge der Teile entspricht.

Es ist möglich, eine Vielzahl von erfindungsgemäßen Schienen parallel nebeneinander anzuordnen und zu betreiben. Die Teile werden jeweils in die unteren Abschnitte der einzelnen Schienen eingegeben, wobei die Menge der pro Zeiteinheit zugeführten Teile so gesteuert wird, daß bei möglichst hoher Zuführleistung alle Teile am oberen Ende der Schienen in die Schlitze eingehängt sind.

Die Zuführung der Teile zu den Schienen kann auf vielfältige Weise erfolgen, zum Beispiel ist es möglich, die ungeordneten Teile über Förderbänder zu den unteren Abschnitten der Schienen zu führen. Auch ist es möglich, die Schiene direkt unterhalb einer Fertigungsvorrichtung für die Teile zu positionieren, so daß die gefertigten Teile direkt auf den unteren Abschnitt der Schiene fallen.

Die Menge der zur Schiene geförderten Teile kann derart gesteuert werden, daß im unteren Bereich der Schiene eine Lichtschranke vorgesehen ist, welche die Zufuhr dann unterbricht, wenn im unteren, trichterförmigen Abschnitt eine vorgegebene Füllhöhe der Teilchen überschritten ist.

Nachfolgend wird anhand der Zeichnung ein Ausführungsbeispiel der Erfindung näher beschrieben. Es zeigt:

Fig. 1 ein Beispiel eines mit einer erfindungsgemäßen Vorrichtung zuzuführenden Teiles;

Fig. 2 schematisch eine perspektivische Ansicht der wesentlichen Teile einer Schiene;

Fig. 3 eine Seitenansicht einer Vorrichtung, in welcher die Schiene gemäß Fig. 2 verwendet wird;

Fig. 4 schematisch ein Detail aus Fig. 3; und

Fig. 5 einen Schnitt entlang der Linie I-II der Fig. 3.

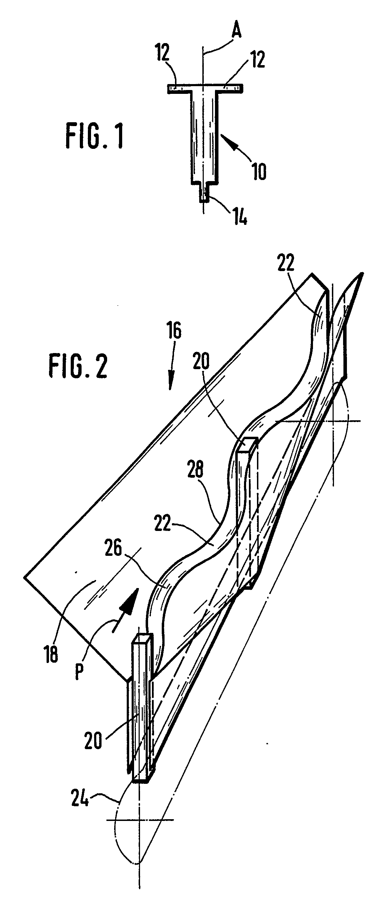

Fig. 1 zeigt als Beispiel eines lagerichtig zuzuführenden Teiles 10 einen Spritzenzylinder für eine medizinische Einwegspritze. Das Teil ist langgestreckt und weist an einem Ende beidseitig Vorsprünge 12 auf, die bei montierter Einwegspritze als Griffstück dienen. Die Spritze weist noch einen Ansatz 14 auf, der zur (nicht dargestellten) Spritzen-Kanüle führt.

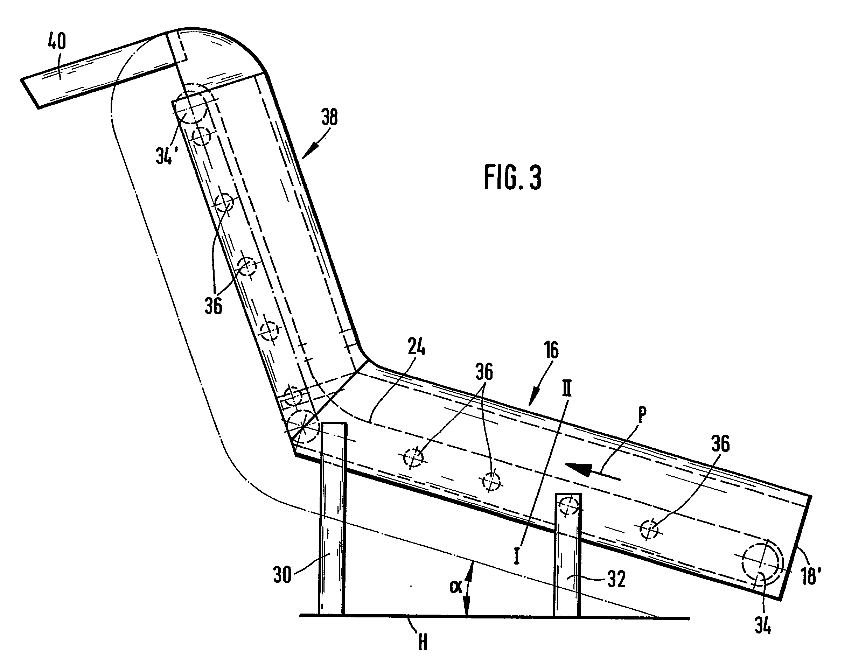

Fig. 2 zeigt eine Schiene 16, die gegen die Horizontale (H) (siehe Fig. 3) aufwärts geneigt ist. Die Schiene ist insgesamt in der Art eines langgestreckten Trichters 18 ausgestaltet, der in einen am Boden des Trichters verlaufenden Schlitz 22 mündet. Der Schlitz 22 hat eine Weite, die etwas größer ist als der Durchmesser der Teile 10.

Im Schlitz 22 werden Förderarme 20 in Längsrichtung der Schiene 16 aufwärts bewegt, d.h. gemäß Fig. 2 nach oben rechts.

Die Förderarme 20 haben eine Breite, die etwa der Weite des Schlitzes 22 entspricht. Der Abstand der Förderarme beträgt ein mehrfaches der Längserstreckung der Teile 10.

Die Förderarme 20 sind auf einer in den Fig. 2 und 3 schematisch dargestellten Antriebskette 24 montiert, welche gemäß Fig. 3 entlang der Schiene 16 geradlinig auf Führungsrollen 36 und um Umlenkrollen 34, 34' geführt ist.

Gemäß Fig. 2 ist die Schiene 16 so ausgestaltet, daß ihr den Schlitz 22 definierender Boden wellenförmig ist. Die aufwärts bewegten Förderarme 20 ragen deshalb während der Aufwärtsbewegung unterschiedlich weit aus dem Schlitz 22 heraus. Wie in Fig. 2 zu erkennen ist, verschwindet ein Förderarm 20 in einem Wellenberg im Schlitz, während er in einem Wellental 28 deutlich aus dem Schlitz herausragt.

Die zuzuführenden Teile werden am unteren Ende der Schiene (in Fig. 2 unten links; in Fig. 3 unten rechts) eingegeben. Eine rückwärtige Abdeckung 18' (Fig. 3) verhindert, daß die Teile aus dem Trichter 18 herausfallen. Die Teile rutschen im Trichter 18 in Richtung auf den wellenförmigen Schlitz 22 und werden dabei von den Förderarmen 20 erfaßt und aufwärts (in Fig. 2 nach oben rechts; in Fig. 3 nach oben links) bewegt. Dabei hängen sich die Teile mit ihren Längsachsen A (Fig. 1) achsparallel zu den Förderarmen 20 in den Schlitz 22, wobei sich die Vorsprünge 12 beidseitig auf den Oberkanten des Schlitzes abstützen.

Gemäß Fig. 3 ist die Schiene 16 von zwei Stützen 30, 32 derart abgestützt, daß der Neigungswinkel $\alpha$ gegen die Horizontale A in Abhängigkeit vom zu fördernden Gut einstellbar ist. An die entsprechend Fig. 2 wellenförmig ausgestaltete Schiene 16 schließt sich ein geradliniges Anschluß-Schienenstück 38 an, welches gegen die Horizontale H stärker geneigt ist als die Schiene 16. Im Anschluß-Schienenstück 38 ist ebenfalls ein den Abmessungen der Teile 10 entsprechender Schlitz ausgebildet und die Förderarme laufen durch diesen Schlitz, so daß die eingehängten Teile 10 aufwärts bis zum oberen Ende des Anschluß-Schienenstücks 38 gefördert werden. An das Anschluß-Schienenstück 38 schließt sich gemäß Fig. 3 ein Abgabe-Schienenstück 40 an, aus dem die lagerichtig ausgerichteten Teile in z. B. eine (nicht gezeigte) Montagevorrichtung überführt werden. In dem Abgabe-Schienenstück 40 sind ebenfalls Schlitze ausgebildet. Handelt es sich bei den zuzuführenden Teilen um Kolben von medizinischen Einwegspritzen, so kann es erwünscht sein, daß diese Kolben nicht nur bezüglich ihrer Längsachse, sondern auch bezüglich ihrer Drehstellung am Ende der Abgabe-Schiene lagerichtig ausgerichtet sind. Hierzu ist beim gezeigten Ausführungsbeispiel vorgesehen, daß sich die Schlitze im Abgabe-Schienenstück 40 in Bewegungsrichtung der Teile verjüngen, so daß sich die im Schnitt kreuzförmigen Spritzenkolben aufgrund der Reibungskräfte an den Schlitzwänden auch bezüglich ihrer Drehstellung um die Längsachse gleichsinnig orientieren.

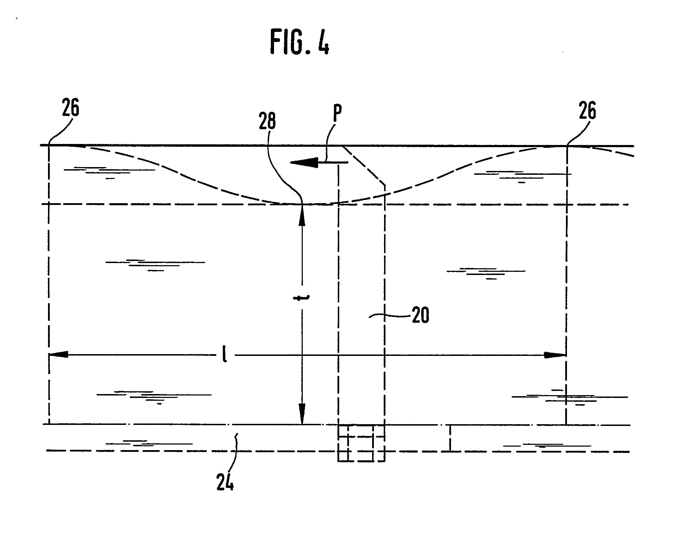

Fig. 4 zeigt eine Seitenansicht der in den Fig. 2 und 3 gezeigten Vorrichtung im Detail. Die Wellenlänge 1 zwischen zwei Wellenbergen 26 der wellenförmig gestalteten Oberkante des Schlitzes 22 entspricht einem mehrfachen, vorzugsweise dem 2- bis 4-fachen der Länge der zuzuführenden Teile 10. Die Tiefe t des Schlitzes 22 entspricht etwa der Länge der Teile 10, so daß diese sich nicht im Schlitz 22 verkanten können.

Der Förderarm 20 wird in Richtung des Pfeiles P bewegt.

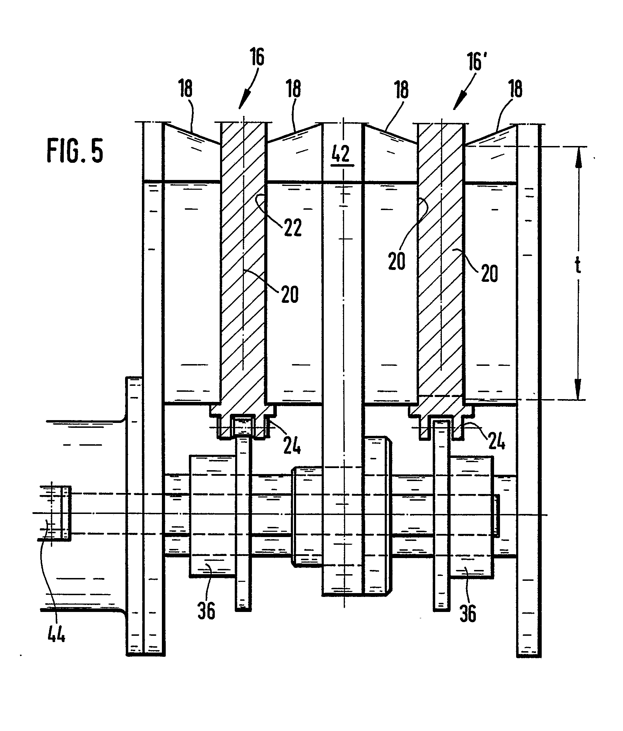

Fig. 5 zeigt einen Schnitt entlang der Linie I-II der Fig. 3. Beim in Fig. 5 gezeigten Ausführungsbeispiel sind zwei Schienen 16, 16' parallel nebeneinander angeordnet und werden durch eine Trennwand 42 voneinander getrennt. Eine gemeinsame Antriebswelle 44 treibt die Antriebsketten 24 beiden Schienen gleichzeitig an.

**Ansprüche**

1. Vorrichtung zum lagerichtigen Zuführen von länglichen, an einem Ende ein Verbreiterung aufweisenden Teilen, wie z.B. Kolben oder Zylinder von Einwegspritzen, mit zumindest einer in Förderrichtung ansteigenden Schiene, die in Längsrichtung ein Schlitz durchsetzt, in dem zumindest ein Förderarm relativ zur Schiene in deren Neigungsrichtung aufwärts bewegbar ist, wobei der Förderarm zumindest während eines Teils seiner Bewegung auf der Oberseite der Schiene aus dem Schlitz herausragt,
dadurch **gekennzeichnet,**
daß die Oberseite der Schiene (16) die Form eines langgestreckten Trichters (18) aufweist, daß die Weite des Schlitzes (22) der Schiene (16) etwas größer ist als der kleinere Durchmesser eines Teiles (10), und daß der bzw. die Förderarme (20) während einer Bewegung entlang der Schiene (16) jeweils periodisch unterschiedlich weit aus dem Schlitz herausragen.

2. Vorrichtung nach Anspruch 1,
dadurch **gekennzeichnet,**
daß die trichterförmige Oberseite der Schiene (16) wellenförmig ist und daß die Förderarme (20) in einem Wellenberg (26) weniger aus dem Schlitz (22) herausragen als in einem Wellental (28).

3. Vorrichtung nach Anspruch 2,
dadurch **gekennzeichnet,**
daß die Wellenlänge (1) der wellenförmigen Oberseite der Schiene (16) einem mehrfachen, vorzugsweise dem 2- bis 4-fachen der Länge der zuzuführenden Teile (10) entspricht.

4. Vorrichtung nach Anspruch 1,
dadurch **gekennzeichnet,**
daß mehrere Förderarme (20) vorgesehen sind, die einen Abstand aufweisen, der einem mehrfachen, vorzugsweise dem 2- bis 3-fachen der Länge der Teile (10) entspricht.

5. Vorrichtung nach einem der vorhergehenden Ansprüche,
dadurch **gekennzeichnet,**
daß der Neigungswinkel (α) der Schiene (16) einstellbar ist.

6. Vorrichtung nach einem der vorhergehenden Ansprüche,
dadurch **gekennzeichnet,**
daß sich an die Schiene (16) ein steiler als diese geneigtes Anschlußschienenstück (38) anschließt.

7. Vorrichtung nach einem der vorhergehenden Ansprüche,
dadurch **gekennzeichnet,**
daß der Schlitz (22) in der Schiene (16) eine Tiefe (t) aufweist, die etwa der Länge der Teile (10) entspricht.

8. Vorrichtung nach einem der vorhergehenden Ansprüche,
dadurch **gekennzeichnet,**
daß mehrere Schienen (16) mit jeweils einem Schlitz (22) nebeneinander angeordnet sind.

9. Vorrichtung nach einem der vorhergehenden Ansprüche,
**gekennzeichnet** durch
eine Einrichtung, mit der die Menge der am unteren Ende jeder Schienen (16) in den Trichter (18) eingebrachten Teile auf ein vorgegebenes Niveau steuerbar ist.

SORTIMAT Creuz & Co GmbH
EP-62 637

FIG.1

FIG.2

FIG. 3

EP 0 304 717 A1

## FIG. 4

FIG. 5

EP 0 304 717 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.3) |
|---|---|---|---|
| X | GB-A- 718 246 (CONSTRUZIONI MECCANICHE GE.) <br> * Seite 1, Zeilen 38-51,66-83; Seite 2, Zeilen 13-35; Figuren 1-4 * | 1,4 | B 65 G 47/14 |
| A | --- | 2 | |
| X | DE-B-1 138 670 (REINERS) <br> * Spalte 3, Zeile 46 - Spalte 4, Zeile 43; Figuren 1-5 * <br> --- | 1,4 | |
| A | GB-A-1 347 862 (CASTIGLIONI) <br> * Seite 4, Zeile 66 - Seite 2, Zeile 10; Seite 2, Zeile 84 - Seite 3, Zeile 2; Figuren 1,2,4,6 * <br> --- | 1,4,6,7 | |
| A | US-A-2 546 866 (OVERLY) <br> * Spalte 2, Zeile 41 - Spalte 4, Zeile 64; Figuren 1-6 * <br> --- | 1,4 | |
| A | US-A-1 582 820 (HUNGERFORD) <br> * Seite 1, Zeilen 61-67; Figur 1 * <br> --- | 5 | |
| A | DE-C- 501 576 (GEBR. HÖLLER) <br> * Seite 1, Zeilen 48-66; Figuren 1,2,6 * <br> --- | 8 | RECHERCHIERTE SACHGEBIETE (Int. Cl.3) <br><br> B 65 G 47/00 |
| A | FR-A-2 130 061 (CONSTRUZIONI MECCANICHE TESSILI SAN GRATO) <br> * Seite 3, Zeilen 11-15; Figuren 1b,3 * <br> --- | 9 | |
| A | DE-U-7 334 674 (CHRISTENSEN) <br> * Figugen 1-3 * <br> ----- | | |

Der vorliegende Recherchenbericht wurde für alle Patentansprüche erstellt

| Recherchenort | Abschlußdatum der Recherche | Prüfer |
|---|---|---|
| BERLIN | 22-11-1988 | SIMON J J P |

EPO FORM 1503 03.82 (P0403)